# EUROPEAN PATENT APPLICATION

(11) **EP 1 783 404 A1**
(43) Date of publication of application: **09.05.2007**
(21) Application number: 05736578.5
(22) Date of filing: 26.04.2005
(51) Int. Cl.: F16J 15/32, F16C 33/78

(54) **ANNULAR MEMBER**

(30) Priority: 29.06.2004 JP 2004190787; 27.09.2004 JP 2004278603
(71) Applicant: NOK Corporation, Minato-ku Tokyo 105-8585 (JP)
(72) Inventor: KOBAYASHI, Naoto, c/o NOK CORPORATION, Fukushima-shi, Fukushima, 9601102 (JP)
(74) Representative: TBK-Patent
(86) International application number: PCT/JP2005/007861
(87) International publication number: WO 2006/001118

(57) **Abstract**

An annular member, a sealing device, and a magnetic encoder device are provided. In the annular member, when a circular tube section (71) of the annular member (7) is fitted with interference in either one of an inner member (3) and an outer member (4) that are movable relative to each other, strain in the circular tube section (71) produced by the fitting interference is not transmitted to a flange section (72) to prevent wavy projections and recesses from being produced in the flange section (72) . In the sealing device and the magnetic encoder device, even if the sealing device (1) and a magnetic encoder device (50) that have the annular member (7) are fitted with interference in the either one member, strain in the circular tube section (71) produced by the fitting interference is not transmitted to the flange section (72). To achieve the above, the thickness of a bent section (73) of the annular member (7) whose circular tube section (71) is fitted with interference to an axial end surface (31) of a shaft (3) is made less than the thickness of the circular tube section (71) and the flange section (72).

## Description

### BACKGROUND OF THE INVENTION

### Field of the Invention

The present invention relates to an annular member which is engaged with an inner member and an outer member which are movable relatively to each other to form an annular space. The present invention is used in a field such as a sealing device and a magnetic encoder device.

### Description of the Conventional Art

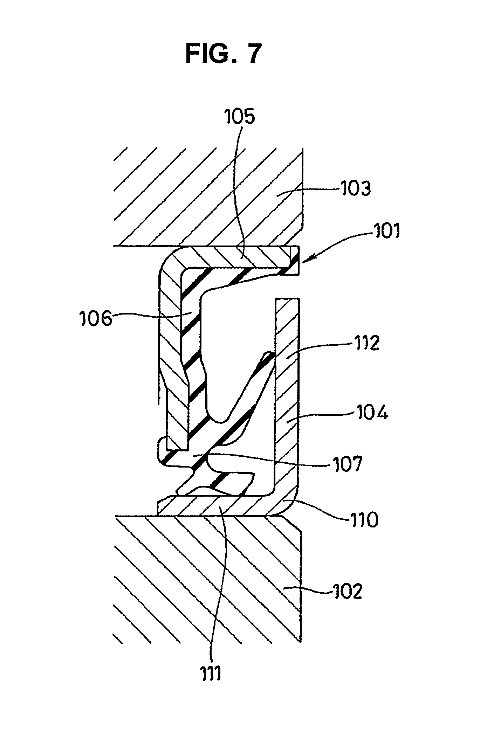

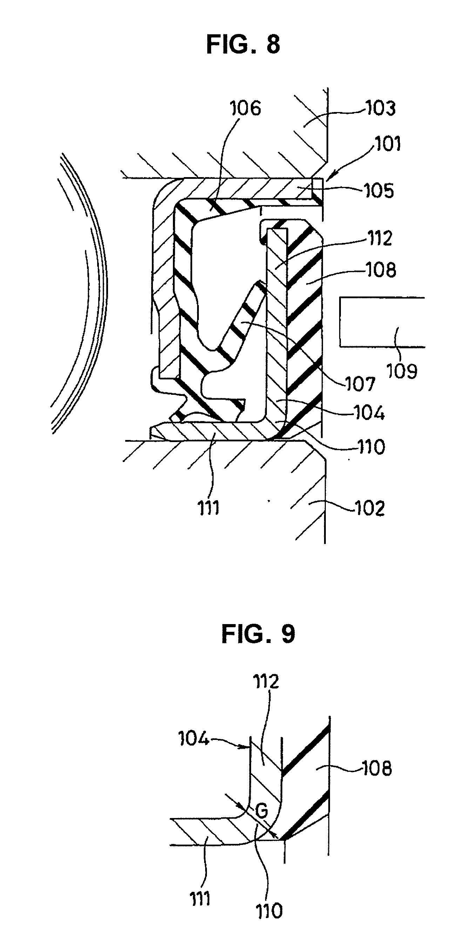

The annular member, having a substantially L-shaped cross-section, composed of a circular tube section, a flange section extending from one end of the circular tube section and a bent section for connecting the circular tube section and the flange section with each other is used in a sealing device, a magnetic encoder device or the like to be fitted in the annular space formed between the inner member and the outer member which are movable relatively to each other. Figs. 7 and 8 show examples where such an annular member is used.

Fig. 7 shows a sealing device 101 to be fitted between a housing 103 and a shaft 102 which are movable relatively to each other, as disclosed in a patent literature 1 set forth below, and the device is provided with a core metal member 105, an annular member 104 and a seal member 106. The core metal member 105 has a substantially L-shaped cross-sectional annular section composed of the circular tube section fitted on a circumferential surface of the housing 103 and the flange section extending from one end of the circular tube section. The annular member 104 is arranged to face the core metal member 105 and has a substantially L-shaped cross-sectional annular shape composed of a circular tube section 111 fitted with a shaft 103, a flange section 112 extending from one end of the circular tube section 111 and a bent section 110 connecting the circular tube section 111 and the flange section 112 with each other. The seal member 106 is made of elastic material such as rubber and resin. A seal body section is fixed to an inner circumferential surface of the core metal member and a lip section 107 is provided to be slidable on an axially inner surface of the flange section 112 and an outer circumferential surface of the circular tube section 111.

Also, Fig. 8 shows a sealing device disclosed in a patent literature 2 set forth below, in which a magnetic encoder 108 is coupled on an outer surface of the flange section 112 of the annular member 104 in the sealing device 101 shown in Fig. 7, and a magnetic sensor 109 for detecting a magnetic field of the magnetic encoder 108 is arranged to face the encoder.

In the foregoing example, in order to prevent the annular member 104 from being pulled apart from the shaft when the annular member 104 is to be fitted with the shaft, an inner diameter of an inner circumferential surface of the circular tube section 111 of the annular member 104 is set to be smaller than an outer diameter of the outer circumferential surface of the shaft 103 to keep a fitting interference. However, there is a problem that, since the fitting interference is kept so that the circular tube section 111 tends to be expanded radially outwardly, strain is produced, and the strain is transmitted to the flange section 112 through the bent section 110 from the circular tube section 111 so that wavy projections are produced in the flange section 112. This is due to the fact that, since when the strain is transmitted from the circular tube section 111 through the bent section 110 to the flange section 112, as shown in enlarged view of Fig. 9, a thickness G of the bent section 110 is the same as the thickness of the circular tube section 111 and the flange section 112, the strain of the circular tube section 111 is transmitted to the flange section 112 intactly. Accordingly, there is a problem that since when it is applied to the sealing device 101, the wavy projections are produced in the flange section 112 on which the lip section 107 is slidable, it is impossible to keep the stable sealability. Also, there is a problem that, when the magnetic encoder 108 is coupled with the flange section 112 of the annular member 104, the wavy projections produced in the flange section 112 is transmitted to the magnetic encoder 108 coupled with the flange section 112 so that the wavy projections are produced also in the magnetic encoder 108, resulting in reduction in detecting accuracy of rotation rate by the magnetic sensor 109.

Patent Literature 1: Japanese Utility Model Laid-Open No. Hei 3-121224
Patent Literature 2: Japanese Patent Laid-Open No. 2003-28309

### SUMMARY OF THE INVENTION

### The problem to be solved by the Invention

In view of the foregoing defects, an object of the present invention is to provide an annular member in which, when a circular tube section of the annular member is fitted with interference with either one member among an inner member and an outer member which are movable relatively to each other to form an annular space, strain of a circular tube section produced by interference is not transmitted to a flange section so that no wavy projection is produced in the flange section, and a sealing device and a magnetic encoder device in which, even if a magnetic encoder device with a magnetic encoder coupled to the sealing device having the annular member and the annular member is fitted to the one member with interference, strain of the circular tube section produced by the interference is not transmitted to the flange section which is the sliding surface of the seal section and the flange section with which the magnetic encoder is coupled.

### Means for solving the problem

In order to attain the above-described object, according to a first aspect of the present invention, an annular member having a substantially L-shaped cross-section composed of a circular tube section engaged with one member among an inner member and an outer member which are movable relatively to each other to define an annular space, a flange section extending from one end of said circular tube section, and a bent section for connecting said circular tube section and said flange section, is characterized in that a cross-sectional thickness of said bent section is made smaller than a cross-sectional thickness of said circular tube section and said flange section.

Further, a sealing device according to a second aspect of the present invention, in which a lip section of a seal member adhered by vulcanization to a core metal member is slidable at least on a flange section of an annular member, is characterized in that said annular member is the annular member according to the first aspect.

Further, a sealing device according to a third aspect of the present invention, is characterized in that a magnetic encoder is coupled with a flange section of the annular member according to the second aspect. Namely, a sealing device sealing an annular space defined between an inner member and an outer member, which are movable relatively to each other, and being provided with a magnetic encoder, is characterized in that, in the annular member composed of a circular tube portion fitted with an end face of said inner member, a flange section extending radially from one end in an axial direction of said circular tube section and coupled with said magnetic encoder and a bent section connecting said circular tube section and said flange section with each other, a thickness of said bent section is made smaller than that of the other sections.

Further, a magnetic encoder device according to a fourth aspect of the present invention, in which a magnetic encoder is coupled with a flange section of an annular member having a substantially L-shaped cross-section whose circular tube section is fitted with one member among an inner member and an outer member which are movable relatively to each other to define an annular space, is characterized in that said annular member is the annular member according to the first aspect.

The present invention exhibits the following effect.

In the annular member provided with the foregoing construction, since the thickness of the bent section connecting the circular tube section and the flange section to each other is made smaller than the thickness of the circular tube section and the flange section, even when the circular tube section is coupled with the one member with interference, there is no fear that strain produced in the circular tube section by the interference is transmitted to the flange section. Accordingly, it is possible to suppress the generation of the wavy projections in the flange section. Further, when the above-described annular member is used in the sealing device, it is possible to suppress the generation of the wavy projections in the flange section of the annular member on which the seal member is slidable, to thereby make it possible to keep the stable sealability. Furthermore, in the case where the magnetic encoder is coupled with the flange section of the above-described annular member, the generation of the wavy projections in the flange section is suppressed whereby it is possible to suppress the generation of the wavy projections in the magnetic encoder coupled with the flange section to thereby make it possible to suppress the degradation of the detection precision of rotation rate by a magnetic sensor.

### BRIEF EXPLANATION OF DRAWINGS

Fig. 1 is a cross-sectional view of a sealing device according to a first embodiment of the present invention.
Fig. 2 is an enlarged cross-sectional view of an X-part of Fig. 1.
Fig. 3 is an enlarged cross-sectional view in another mode of the X-part of Fig. 1.
Fig. 4 is a cross-sectional view of a sealing device according to a second embodiment of the present invention.
Fig. 5 is a cross-sectional view of a magnetic encoder device according to a third embodiment of the present invention.
Fig. 6 is a cross-sectional view of a magnetic encoder device according to a fourth embodiment of the present invention.
Fig. 7 is across-sectional view of a sealing device in a conventional example.
Fig. 8 is a cross-sectional view of a sealing device in another conventional example.
Fig. 9 is an enlarged cross-sectional view of an X-part in the conventional example.

### Explanation of Numerals

- 1: sealing device
- 2: rolling member
- 3: outer member (shaft)
- 4: inner member (housing)
- 5: magnetic encoder
- 6: magnetic sensor
- 7: annular member
- 8: core metal member
- 9: seal member
- 31, 76: end faces
- 50: magnetic encoder device
- 71, 81: circular tube sections
- 72, 82: flange sections
- 73: bent section
- 74: taper
- 75: stepped portion
- 91: seal body section
- 92, 93, 94: seal lips
- 95: lip section

### DETAILED DESCRIPTION OF PREFERRED EMBODIMENT

Preferred embodiments of this invention will now be described with reference to the accompanying drawings. However, the scope of this invention is not limited to the contents described in the embodiments so far as the limitative description is not given.

### FIRST EMBODIMENT

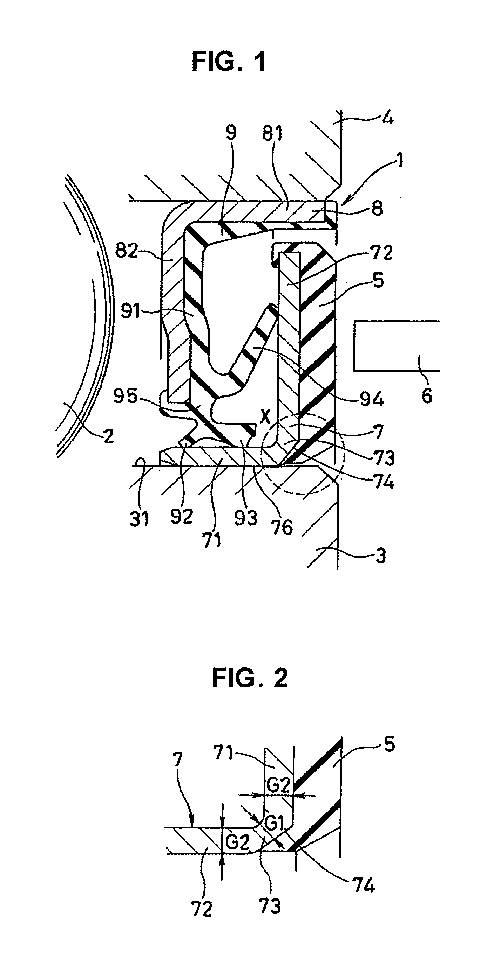

Fig. 1 is a cross-sectional view of a sealing device provided with a magnetic encoder in accordance with a first embodiment. Fig. 2 is an enlarged cross-sectional view of an X-part which is marked in circle perforated line of Fig. 1.

A sealing device 1 according to the first embodiment shown in Fig. 1 is fitted so as to seal an annular space defined by a shaft 3 which is an inner member and a housing 4 which is an outer member, both of which are rotated relatively to each other through a rolling member 2 and is provided with a magnetic encoder 5 on an outer side in an axial direction.

The sealing device 1 is provided with a substantially L-shaped cross-sectional annular member 7 which is engaged at an end face in a radial direction of the shaft 3, a substantially L-shaped cross-sectional core metal member 8 which is engaged at an end face in a radial direction of the housing 4 and faces the annular member 7, and a seal member 9 integrally formed with a lip section 95 which is slidable on the annular member 7 and a seal body section 91 adhered by vulcanization to the core metal member 8. The core metal member 8 is composed of a circular tube section 81, outer side of which is fitted on an end face in the radial direction of the housing 4, and a flange section 82 extending in a radially inward direction from an inner side end section in an axial direction of the circular tube section 81, and a seal body section 91 made of rubber-like elastic material is adhered by vulcanization to an radially inner end face of the circular tube section 81 and an outer end face of the flange section 82. The seal member 9 is composed of the seal body section 91 integrally formed with a lip section 95 having a first seal lip 92 and a second seal lip 93 that are slidable on a radially outer end face of the circular tube section 71 of the annular member 7 to be described later and a third seal lip 94 that is slidable on an axially inner end face of the flange portion 72 of the annular member 7.

The annular member 7 is composed of the circular tube section 71 fitted with the radial end face 31 of the shaft 3, the flange section 72 on which the third seal lip 94 of the lip section 95 is slidable on an axially inner surface thereof and which extends radially from the axially outer end portion of the circular tube section 71, and the bent section 73 connecting the circular tube section 71 and the flange section 72 with each other. The circular tube section 71 is fitted with the shaft 3 by such interference that the inner diameter of the radially inner end face 76 is smaller than an outer diameter of the radially outer end face 31. As shown in Fig. 2, a taper 74 is formed in the bent section 73, whereby a thickness G1 of the bent section 73 is smaller than a thickness G2 of the circular tube section 71 and the flange section 72 which are the other sections than the bent section.

The magnetic encoder 5 is coupled with the axially outer end face of the flange section 72 by vulcanization adhesion. Magnetic materials such as ferrite based magnetic powder, rare-earth magnetic powder, archoni magnetic powder or the like is added alone or in mixture to a rubber material, and vulcanized and molded. Thereafter, the molded material is magnetized. Magnetic poles are formed alternatively in a circumferential direction and are detected by a magnetic sensor 6 arranged close to the device.

In the sealing device having the annular member constructed as described above, the taper 74 is formed in the bent section 73 connecting the circular tube section 71 and the flange section 72 of the annular member 7 coupled with the shaft 3, so that the thickness G1 of the bent section 73 is smaller than the thickness of the circular tube section 71 and the flange section 72. Even when the circular tube section 71 is fitted with the shaft 3 with interference, the circular tube section 71 interrupts the strain expanding in the radially outward direction by the bent section 73 to prevent the transmission to the flange section 72, to thereby make it possible to prevent wavy projections from being produced on the sliding surface of the flange section 72 that is slidable on the lip section 95 and to make it possible to keep the stable sealability. Furthermore, it is possible to prevent the wavy projections from being produced in the flange section 72, to thereby make it possible to prevent the wavy projections from being produced on the magnetic encoder 5 coupled with the flange section 72 and to thereby make it possible to keep stable magnetic density.

### SECOND EMBODIMENT

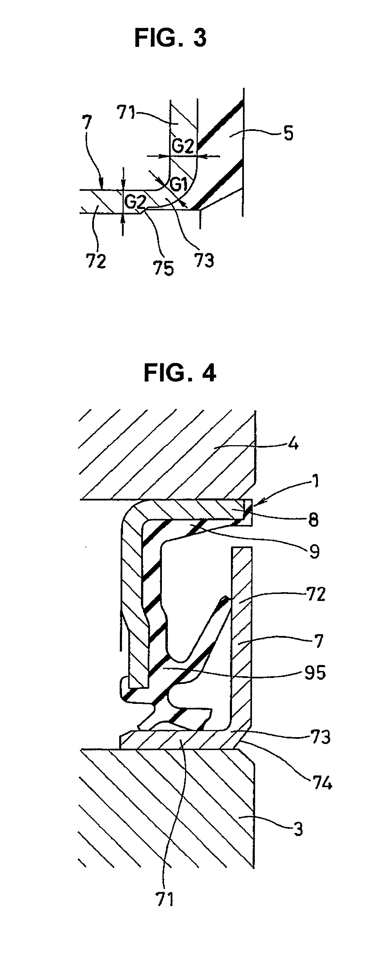

Fig. 4 is a cross-sectional view of a sealing device in accordance with a second embodiment of the present invention.

In the sealing device 1 in accordance with the second embodiment shown in Fig. 4, the magnetic encoder is not coupled with the sealing device unlike the first embodiment but the sealing device 1 is provided with the core metal member 8, the annular member 7 and the seal member 9 which are the same as those of the first embodiment. Namely, the annular member 7 is composed of a circular tube section 71 fitted with the radial end face 31 of the shaft 3, a flange section 72 on which a third seal lip 94 of the lip section 95 is slidable on the axially inner surface and which extends from the axially outer end portion of the circular tube section 71 in the radially outward direction, and a bent section 73 connecting the circular tube section 71 and the flange section 72 with each other. The circular tube section 71 is coupled with the shaft 3 by such interference that the inner diameter of the radially inner end face 76 is smaller than the outer diameter of the radial end face 31 of the shaft 3. A taper 74 shown in Fig. 2 is formed in the bent section 73, whereby the thickness G1 of the bent section 73 is smaller than the thickness G2 of the circular tube section 71 and the flange section 72.

In the sealing device having the annular member constructed as described above, the taper 74 is formed in the bent section 73 of the annular member 7 so that the thickness G1 of the bent section 73 is smaller than the thickness of the circular tube section 71 and the flange section 72. Even when the circular tube section 71 is fitted with the shaft 3 with interference, the circular tube section 71 interrupts the strain expanding in the radially outward direction by the bent section 73 to prevent the transmission to the flange section 72, to thereby make it possible to prevent wavy projections from being produced on the sliding surface of the flange section 72, on which the lip section 95 is slidable, and to make it possible to keep the stable sealability.

### THIRD EMBODIMENT

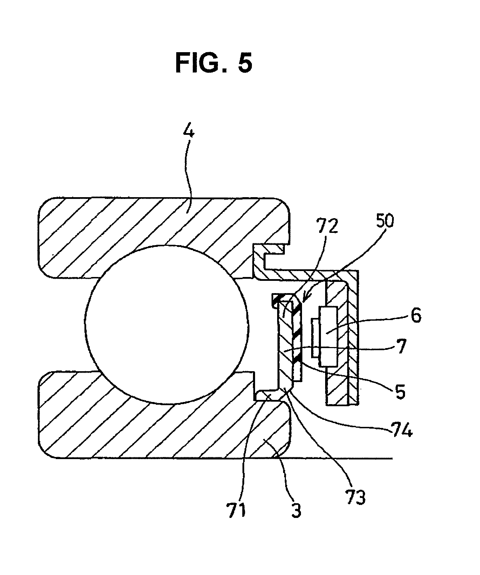

Fig. 5 is a cross-sectional view of a magnetic encoder device according to a third embodiment of the present invention.

A magnetic encoder device 50 in accordance with the third embodiment shown in Fig. 5 is provided with an annular member 7 fitted with a shaft 3 for defining an annular space and a magnetic encoder 5.

The annular member 7 is composed of the circular tube section 71 fitted with the radial end face 31 of the shaft 3, the flange section 72 extending from the axially outer end portion of the circular tube section 71, and the bent section 73 connecting the circular tube section 71 and the flange section 73 with each other. The circular tube section 71 is fitted with the shaft 3 by such interference that the inner diameter of the radially inner end face 76 is smaller than an outer diameter of the radially outer end face 31. As shown in Fig. 2, a taper 74 is formed in the bent section 73, whereby a thickness G1 of the bent section 73 is smaller than a thickness G2 of the circular tube section 71 and the flange section 72 which are the other sections than the bent section.

The magnetic encoder 5 is coupled with the axially outer end face of the flange section 72 of the annular member 7 by vulcanization adhesion. Magnetic materials such as ferrite based magnetic powder, rare-earth magnetic powder, archoni magnetic powder or the like is added alone or in mixture to a rubber material, and vulcanized and molded. Thereafter, the molded material is magnetized. Magnetic poles are formed alternatively in a circumferential direction and are detected by a magnetic sensor 6 arranged close to the device.

In a magnetic encoder device 50 in which the magnetic encoder 5 is coupled with the annular member 7 having the above-described construction, the taper 74 is formed in the bent section 73 connecting the circular tube section 71 and the flange section 72 of the annular member 7 coupled with the shaft 3, so that the thickness G1 of the bent section 73 is smaller than the thickness G2 of the circular tube section 71 and the flange section 72. Even when the circular tube section 71 is fitted with the shaft 3 with interference, the circular tube section 71 interrupts the strain expanding in the radially outward direction by the bent section 73 to prevent the transmission to the flange section 72, to thereby make it possible to prevent wavy projections from being produced on the sliding surface of the flange section 72, to prevent the wavy projections to be produced in the flange section 72 to thereby make it possible to prevent the wavy projections from being produced on the magnetic encoder 5 coupled with the flange section 72 and to thereby make it possible to keep stable magnetic density.

### FOURTH EMBODIMENT

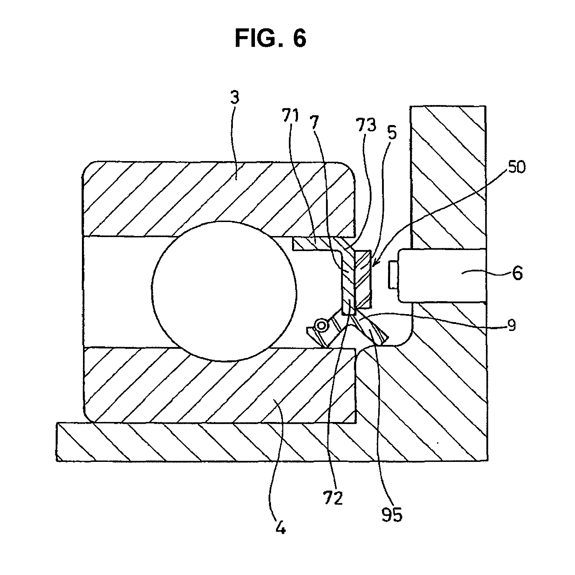

Fig. 6 is a cross-sectional view in accordance with a magnetic encoder device in accordance with a fourth embodiment of the present invention.

A magnetic encoder device 50 according to the fourth embodiment shown in Fig. 6 is the case where a seal member 9 is adhered to the annular member 7 according to the third embodiment. Namely, the seal member 9 having a lip section 95 that is slidable on a housing 4 is adhered to a radially outer end portion of the flange section of the annular member 7 composed of a circular tube section 71 fitted with a radial end face 31 of the shaft 3, a flange section 72 extending in the radially outward direction from the axially outer end portion of the circular tube section 71 and a bent section 73 connecting the circular tube section 71 and the flange section 72 with each other. The circular tube section 71 is fitted with the shaft 3 by such interference that the inner diameter of the radially inner end face 76 is smaller than an outer diameter of the radially outer end face 31. As shown in Fig. 2, a taper 74 is formed in the bent section 73, whereby a thickness G1 of the bent section 73 is smaller than a thickness G2 of the circular tube section 71 and the flange section 72 which are the other sections than the bent section.

In the encoder device 50 where the magnetic encoder 5 is coupled with the annular member 7 having the above-described construction, the taper 74 is formed in the bent section 73 for connecting the circular tube section 71 of the annular member 7 coupled with the shaft 3 and the flange section 72 with each other, similarly to the third embodiment. Accordingly, a thickness G1 of the bent section 73 is smaller than a thickness G2 of the circular tube section 71 and the flange section 72 which are the other sections than the bent section. Even when the circular tube section 71 is fitted with the shaft 3 with interference, the circular tube section 71 interrupts the strain expanding in the radially outward direction by the bent section 73 to prevent the transmission to the flange section 72, to thereby make it possible to prevent wavy projections from being produced on the sliding surface of the flange section 72, to prevent the wavy projections to be produced in the flange section 72, to thereby make it possible to prevent the wavy projections from being produced on the magnetic encoder 5 coupled with the flange section 72, and to thereby make it possible to keep stable magnetic density. Also, the lip section 95 is provided to the end portion of the flange section 72 to thereby make it possible to prevent outer foreign matters from entering into the annular space.

Incidentally, as shown in Fig. 3, instead of the taper 74 formed in the bent section 73 of the annular member 7, a stepped portion 75 may be formed so that the thickness G1 of the bent section 73 may be smaller than the thickness G2 of the circular tube section 71 and the flange section 72.

Further, although the taper 74 or the stepped portion 75 formed in the bent section 73 is formed in the axially outward direction (on the upper right side in the figure), it is possible to form it in the axially inward direction. Furthermore, a shape of the taper 74 or the stepped portion 75 is not particularly limited to the specific one but it is possible to select a suitable shape so that the thickness G1 of the bent section 73 is made smaller than the thickness G2 of the circular tube section 71 and the flange portion 72 which are the other sections than the bent section.

## Claims

1. An annular member (7) having a substantially L-shaped cross-section composed of a circular tube section (71) engaged with one member (3 or 4) among an inner member (3) and an outer member (4) which are movable relatively to each other to define an annular space, a flange section (72) extending from one end of said circular tube section (71), and a bent section (73) for connecting said circular tube section (71) and said flange section (72), **characterized in that** a cross-sectional thickness (G1) of said bent section (73) is made smaller than a cross-sectional thickness (G2) of said circular tube section (71) and said flange section (72).

2. A sealing device (1) in which a lip section (95) of a seal member (9) adhered by vulcanization to a core metal member (8) is slidable at least on a flange section (72) of an annular member (7), **characterized in that** said annular member (7) is the annular member as claimed in Claim 1.

3. A sealing device **characterized in that** a magnetic encoder (5) is coupled with a flange section (72) of the annular member (7) as claimed in Claim 2.

4. A magnetic encoder device (50) in which a magnetic encoder (5) is coupled with a flange section (72) of an annular member (7) having a substantially L-shaped cross-section whose circular tube section (71) is fitted with one member (3 or 4) among an inner member (3) and an outer member (4) which are movable relatively to each other to define an annular space, **characterized in that** said annular member (7) is the annular member as claimed in Claim 1.
